(19)

Europäisches Patentamt

European Patent Office

Office européen des brevets

(11) **EP 4 385 316 A1**

(12) **EUROPEAN PATENT APPLICATION**

(43) Date of publication:
**19.06.2024 Bulletin 2024/25**

(21) Application number: **22213442.1**

(22) Date of filing: **14.12.2022**

(51) International Patent Classification (IPC):
**A01G 7/04** (2006.01)

(52) Cooperative Patent Classification (CPC):
**A01G 7/045**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Gardin Ltd**
**Abingdon, Oxfordshire OX14 4RY (GB)**

(72) Inventors:
• **Godding, Julian**
**Bisley, GL6 7AN (GB)**

• **Ticchiarelli, Fabrizio**
**Winchester, SO23 9PG (GB)**
• **Cousins, Olivia**
**Oxford, OX3 8RJ (GB)**
• **Grundy, Steven**
**Abingdon, OX14 5BZ (GB)**

(74) Representative: **Gill Jennings & Every LLP**
**The Broadgate Tower**
**20 Primrose Street**
**London EC2A 2ES (GB)**

(54) **LIGHT CONTROL METHOD FOR PLANT GROWTH**

(57)　　There is provided a method of controlling lighting for plant growth. The method comprises irradiating a plant with light in at least two irradiation steps. The intensity of actinic light in each irradiation step is different. The method also comprises determining the intensity of light during each irradiation step, and measuring the chlorophyll fluorescence of the plant during each irradiation step. A light intensity for plant growth is selected based on the observed relationship between the determined intensity of light and the measured chlorophyll fluorescence across the at least two irradiation steps.

FIG. 1

EP 4 385 316 A1

## Description

## FIELD OF THE INVENTION

The invention relates to a method of controlling lighting for plant growth suitable for use in commercial greenhouses, vertical farms and the like.

## BACKGROUND

In many commercial crop growth contexts, a controllable actinic light source is used to induce photochemistry required for plant growth. When growing a crop, a grower needs to know the light level required for a crop in order to set an appropriate actinic lighting intensity. Providing too little light can stall the growth of a crop. Providing excessive light can be inefficient in terms of running costs to the grower or even detrimental to crop health.

A plant's response to light intensity is generally measured by its electron transport rate. It is generally observed that a plant's electron transport rate increases linearly with increasing light intensity for low intensity values, but then begins to become limited by non-photochemical quenching. This relationship is often mapped on so-called light-response curves, which may be obtained by measuring changes in $CO_2$ assimilation with increasing light intensity.

Plants will adapt to their growth conditions, meaning that even the same variety of plant may require different lighting levels depending on their growth history. This can make it very difficult for growers to set an appropriate light level for a particular instance of a particular crop type and to maintain appropriate lighting conditions across the life of the crop.

Conventionally, indoor growers will use trial and error to discover a generic light 'recipe' for a particular plant species which typically gives a satisfactory yield and quality. Growers may then adjust light intensities for each growth cycle in an ad hoc manner to accelerate or decelerate growth based on judgements of the plant at a particular time.

It is preferable to provide a method of controlling lighting that allows a grower to adjust lighting levels based on the plant's response to light in order to maximise photosynthetic efficiency.

## SUMMARY OF INVENTION

According to a first aspect of the invention, there is provided a method of controlling lighting for plant growth, the method comprising: irradiating a plant with light in at least two irradiation steps, wherein the intensity of light in each irradiation step is different; determining an intensity of light during each irradiation step (relative or absolute); measuring the chlorophyll fluorescence of the plant during each irradiation step; and selecting a light intensity for plant growth based on the observed relationship between the determined intensity of light and the measured chlorophyll fluorescence across the at least two irradiation steps.

This method uses chlorophyll measurements made while a plant is exposed to light of at least two different intensities, e.g. from an adjustable light source, to identify a preferred lighting intensity for plant growth. The preferred light intensity may be selected by observing the change in certain chlorophyll fluorescence values with changing light intensity. In particular, the quantum efficiency of photosynthesis may be observed at the different light intensities. By observing this change over at least two different irradiation intensities, it is possible predict, to some extent, a light response curve for the particular plant measured, which enables a user to predict the electron transport rate they will achieve for a particular irradiation intensity.

The present method is based on the observed biological relationship:

$$E \sim P \times qe$$

where E is the electron transport rate, P is the photosynthetic photon flux density (PPFD), i.e. a measure of intensity of photosynthetically active photons (having a wavelength of approximately 400-700 nm), and qe is the energy-dependent quenching of chlorophyll fluorescence. The energy-dependent quenching of chlorophyll fluorescence, qe, can be estimated using the chlorophyll measurements F' and $F_m'$. F' is the baseline fluorescence level of a light-adapted plant. $F_m'$ is a measure of the maximal fluorescence of a plant in this light-adapted state, which is measured by exposing a light-adapted plant to a high intensity pulse and detecting the resulting chlorophyll fluorescence. The difference in these values is referred to as $F_q'$, i.e.:

$$F_q' = F_m' - F'$$

From these values, qe is estimated as:

$$qe = \frac{F_q'}{F_m'}$$

The energy-dependent quenching of chlorophyll fluorescence, qe, is a function of light intensity, i.e. P, and can be assumed to be:

$$qe(P) = mP + c$$

where m and c are linear parameters. Therefore, electron transport rate, E, as a function of light intensity, P, can be estimated as:

$$E(P) = mP^2 + cP$$

and from this the derivative of E(P) is:

$$E'(P) = 2mP + c$$

The quadratic turning point, i.e. corresponding to the maximum electron transport rate, and hence the maximum light required, $P_m$, is thus:

$$E'(P_m) = 0$$

and so:

$$P_m = -\frac{c}{2m}$$

Thus, we have a derivation for the light intensity $P_m$ required for the maximum electron transport rate $E_m$ using linear parameters c and m, which can be found using the regression of qe and P values obtained during the measurements of the at least two different light intensities noted above. Therefore, preferably the selecting of a light intensity for plant growth is based on a regression of the determined intensity of light and the measured chlorophyll fluorescence of the at least two irradiation steps. As will be described below, the determined intensity may be based on a pixel brightness of an image captured of the plant during each irradiation step, and so the regression may be applied to the determined pixel brightness and the measured chlorophyll fluorescence of the at least two irradiation steps.

In view of the above, the present technique exposes a plant to two different light intensity levels, determines the intensity of light used for each, and takes chlorophyll fluorescence measurements at each light intensity, which enable the derivation of $P_m$. Therefore, these measurements allow an efficient light intensity level to be determined.

It should be noted that the above description demonstrates how the light intensity $P_m$ required for the maximum electron transport rate $E_m$ can be derived from determined light intensity values and measured chlorophyll fluorescence. However, the light intensity selected for use in crop growth need not be the value $P_m$. Indeed, because of the increase in energy-dependent quenching of chlorophyll fluorescence at higher intensities, light use becomes less efficient (i.e. less light is converted into electron transport) the closer the intensity gets to the value $P_m$, and indeed electron transport rate may decrease if light intensity is above this value. Therefore, a good balance of high electron transport rate in the crop while avoiding inefficient light use may be achieved by selecting a value of light intensity that is less than $P_m$. In other words, preferably, selecting the light intensity for plant growth comprises selecting a light intensity that is less than an estimated light intensity required to achieve a maximum electron transport rate, wherein the estimated light intensity required to achieve a maximum electron transport rate is obtainable using the determined intensity of light and the measured chlorophyll fluorescence of the plant during each irradiation step. It should be noted here that the method may not involve actually estimating the light intensity required to achieve a maximum electron transport rate. For example, a different equation may be used to estimate $P_m$ or the above equation may be modified, e.g. to calculate 75% of this value and select this as the light intensity value. Nonetheless, the method should involve using the observed relationship between light intensity and chlorophyll fluorescence to select a light intensity for plant growth that corresponds to a fraction of a light intensity $P_m$ as estimated to achieve a maximum electron transport rate $E_m$ by the equation noted above, even if this estimation is not performed as part of the selection.

The selected fraction of the estimated light intensity $P_m$ for maximum electron transport rate may be set as desired with a grower's preferences in mind for energy efficiency versus plant growth rate, and can be set, for example, based on a grower's past experience for a particular plant type. However, it has been found that a very good balance of plant growth rate and energy efficiency can be achieved if the light intensity is set to correspond to the theoretical value at which the maximum electron transport rate $E_m$ would be achieved in the absence of any non-photochemical quenching. This light intensity value $P_k$ can be estimated by building on the above equations. In particular, from the equation for $P_m$ and the equation for E(P), the maximum electron transport rate can be calculated as:

$$E_m = \frac{c^2}{4m} - \frac{c^2}{2m} = -\frac{c^2}{4m}$$

and thus $P_k$ can be found as:

$$P_k = \frac{E_m}{E'(0)} = -\frac{c}{4m} = \frac{1}{2}P_m$$

Accordingly, $P_k$ can also be estimated from the same linear parameters c and m, in the same manner described above. In other embodiments, the selected light intensity may be somewhere in the range of one quarter to three quarters of $P_m$.

It will be appreciated here that what is important is that a more efficient light intensity for plant growth can be selected based on the observed relationship between light intensity and chlorophyll fluorescence, which will allow a grower to avoid using overly intense lighting that would be inefficient and/or detrimental to the plant.

As indicated above, preferably measuring the chlorophyll fluorescence of the plant during each irradiation step comprises measuring the baseline fluorescence level of the plant F' and measuring the maximal fluorescence of the plant $F_m$' during each irradiation step, and the selection of light intensity is made based on the observed relationship between the determined light intensity and the measured baseline fluorescence level and maximal fluorescence of the plant in each irradiation step. Other chlorophyll fluorescence measurements could also be made of the plant in or between the irradiation steps.

While at least two different light intensities are used in the above method, preferably the method comprises irradiating a plant with light in at least three irradiation steps, more preferably at least four irradiation steps, even more preferably at least five irradiation steps, most preferably at least ten irradiation steps, wherein the intensity of light in each irradiation step is different. It will be appreciated that having more different light intensities provide more data points for the selection of an efficient light intensity. Regardless of the number of irradiation steps, the chlorophyll fluorescence measurements should be taken in relatively quick succession, therefore preferably each of the irradiation steps (and the corresponding chlorophyll fluorescence measurements) takes place within at most 10 minutes of one another, more preferably within at most 5 minutes, most preferably within at most 2 minutes of one another. Preferably the interval between each irradiation step is at most 2 minutes, preferably at most 1 minute, more preferably at most 30 seconds, most preferably at most 10 seconds.

As indicated above, preferably the different light intensities are produced by an adjustable light source. Preferably the light used is actinic light, i.e. photosynthetically active, such as from an actinic light source, although the light source need not exclusively produce actinic light, i.e. having a wavelength of approximately 400-700 nm, and could also include light outside of this range.

Preferably one of the intensities of the light used in one of the irradiation steps is at least 1.5 times, preferably double, the intensity of the light used in another of the irradiation steps. Preferably two of the intensities of light used in the at least two irradiation steps differ by at least 25 $\mu$mol m$^{-2}$ s$^{-1}$, more preferably at least 40 $\mu$mol m$^{-2}$ s$^{-1}$, even more preferably at least 100 $\mu$mol m$^{-2}$ s$^{-1}$. Preferably, the highest and lowest intensities of light used in the at least two irradiation steps differ by at least 100 $\mu$mol m$^{-2}$ s$^{-1}$, more preferably at least 200 $\mu$mol m$^{-2}$ s$^{-1}$.

In some embodiments, the plant may be growing while irradiated by light of an initial intensity before any of the at least two irradiation steps, and the at least two irradiation steps may include an intensity above and an intensity below the initial intensity. Preferably, the at least two irradiation steps comprise an intensity at 5% above the initial intensity, more preferably at least 10% above the initial intensity, even more preferably at least 20% above the initial intensity, most preferably at least 30% above the initial intensity, and an intensity at least 5% below the initial intensity, more preferably at least 10% below the initial intensity, even more preferably at least 20% below the initial intensity, most preferably at least 30% below the initial intensity. This allows the method to be based on intensities around the currently used intensity, which may improve the selected intensity.

The measurement of chlorophyll fluorescence is a subject of significant research. A description of the theory behind chlorophyll fluorescence analysis can be found in "Chlorophyll fluorescence analysis: a guide to good practice and understanding some new applications.", by E. Murchie and T. Lawson, Journal of experimental botany, 64 13 (2013): 3983-98, DOI:10.1093/jxb/ert208.

There are many different techniques for measuring chlorophyll fluorescence; however, a preferred technique is one that integrates well in typical existing commercial growth settings and minimises disruption. Therefore, preferably the method comprises remotely measuring the chlorophyll fluorescence of the plant during each irradiation step. This is in contrast with contact sensors for measuring chlorophyll fluorescence. In particularly preferable embodiments, measuring the chlorophyll fluorescence of the plant during each irradiation step comprises using a measurement light source to emit substantially collimated or convergently focussed light to irradiate a measurement area of the plant with measurement light, and using an optical sensor to detect chlorophyll fluorescence from the measurement area. The measurement light source and the optical sensor may be controlled by a controller to perform these steps, and this controller may also control a light source for irradiating the plant in the irradiation steps. The term "substantially collimated" will be understood to encompass a light source with a beam divergence of 10° or less. More tightly collimated light will, of course, be preferred, and indeed, it will be preferred to have a beam divergence of 5° or less, more preferably 2° or less, even more preferably 1° or less, most preferably 0.1° or less. Commercially available lasers will typically have a beam divergence of much less than 0.1°. The use of substantially collimated or convergently focussed light allows measurements to be using a light source positioned at a distance, preferably of at least 0.1 m, more preferably from a distance of at least 0.2 m, even more preferably from a distance of at least 0.5, e.g. fixed above a plant. Preferably, the optical sensor is also positioned at a distance, preferably of at least 0.1 m, more preferably from a distance of at least 0.2 m, even more preferably from a distance of at least 0.5, e.g. fixed above a plant. This is compared with many conventional chlorophyll fluorescence measurement techniques, which involve devices that are manually clipped on to leaves in order to take a measurement, or which bathe a crop in measurement light.

In these embodiments, preferably the optical sensor comprises an imaging optical sensor, such as a camera, configured to capture an image of the measurement area. This is preferred for a number of reasons. Firstly, this allows the position of the measurement area within the field of view of the sensor to be determined, which may allow for distance to the measurement area to be determined. Additionally, the images captured during the running of the light control method can be used to construct an image of the crop canopy and asses the health of the plants, which can be useful for other aspects of plant growth. While an imaging sensor is preferred, chlorophyll fluorescence could also be measured with a non-imaging system sensor. Indeed, a non-imaging sensor may be preferred in some contexts. For example, a non-imaging sensor may be able to achieve higher measurement frequencies, e.g. if it outputs an analogue signal. Suitable optical sensors may include silicon photodetectors and/or a photodiode.

Whether an imaging or non-imaging optical sensor is used, it is preferable that an optical sensor with a small field of view is used. In particular, the optical sensor may receive light from a field of view of no more than 400 deg$^2$, preferably no more than 200 deg$^2$, more preferably no more than 50 deg$^2$, most preferably no more than 25 deg$^2$. A typical camera that may be used as the optical sensor may have a field of view of 18° x 12° or less, or more preferably 6° x 4°. The use of an optical sensor with a relatively small field of view is particularly preferred for a number of reasons. Significantly, this reduces the signal to noise ration of the chlorophyll fluorescence measurement, i.e. since the irradiated area covers a greater proportion of the field of view of the sensor. Additionally, a smaller field of view means less data to transfer and process when analysing the chlorophyll fluorescence measurements, which speeds up the measurement and hence the whole light control method.

As mentioned above, preferably the measurement light source comprises a laser, wherein preferably the laser is configured to irradiate a spot-shaped area with light, although a laser configured to irradiate a line-shaped area could also be used. A laser is particularly useful as it produces tightly collimated light and typically irradiates a very small area, and can be selected to use light of a desired wavelength. This is therefore able to meet the required energy density threshold for irradiated areas while using a comparatively low amount of power, and is also capable of working across a wide range of distances. Preferably the laser is an adjustable power laser. This would enable the same laser to perform both the saturation and measurement pulses required when measuring chlorophyll fluorescence. Alternatively, or additionally, this may allow the laser to adjust power to compensate for the distance to the measurement area and/or variation in irradiation area due to the target being inclined relative to the direction of incidence. It will be appreciated that the light source may comprise more than one laser, for example, if it is desired to take separate measurements using light of different wavelengths.

Particularly when the measurement light source is a laser, another advantage of using an imaging optical sensor is that this can improve the quality of the chlorophyll fluorescence measurement by compensating for the laser irradiation profile. In particular, the chlorophyll fluorescence measurement may comprise identifying a target area in a measurement image of the imaging sensor, the target area being a portion of the measurement area irradiated by the measurement light source, wherein preferably a laser is used to irradiate a spot-shaped area with light and the target area is a central portion of the irradiated spot-shaped area. Because a laser will typically not have a flat top irradiance profile, some portions of the area irradiated with laser light may not reach the saturation threshold. Therefore, an imaging sensor may allow the controller to isolate a portion of the area irradiated with light in which this threshold is met, and the chlorophyll fluorescence measurement may be detected from this area. The target area may be determined in advance based on the characteristics of the laser or may be determined directly from the measurement image based on detection of reflected laser light or the detected chlorophyll fluorescence profile.

While the chlorophyll fluorescence measurement could be made using a fixed measurement light source and optical sensor, i.e. configured to irradiate the same area of the plant on each occasion, it is preferable that the method can be performed on different areas of a plant or even on different plants within a crop. This would allow the method to compensate for plant growth or even repeat the method for different plants in a crop to base the light control method on the response of multiple plants. Therefore, preferably, the method comprises identifying a target measurement area and using an actuator to controllably direct the light from the measurement light source to irradiate the target measurement area. This may again be controlled by the controller. The movement may typically involve an actuator that is configured to move the light source so as to direct the light from the light source. That is, by moving the whole measurement light source, it is possible to change the area irradiated with light from that light source.

Alternatively, or additionally, the actuator may be configured to move one or more optical elements, such as mirrors, relative to the measurement light source so as to direct the light from the measurement light source. The use of, for example, a scanning mirror or a light-steering microelectromechanical system may allow the light from the measurement light source to be directed between different areas without movement of the light source.

While a steerable measurement light source could be used with a fixed optical sensor, e.g. with a wide field of view, preferably, the method comprises an actuator, preferably the same actuator used to controllably direct the light from the measurement light source, to move the optical sensor and/or to move one or more optical elements, such as mirrors, relative to the optical sensor so as to enable the optical sensor to detect chlorophyll fluorescence from the target measurement area. This enables for smaller field of view sensors to be used while still allowing measurements to be made over a wide area. The use of a single actuator to direct both the measurement light source and the optical sensor means that the hardware used to perform the method can be smaller and less expensive to produce.

One problem faced when making chlorophyll fluorescence measurements is that these measurements are often made in settings in which the amount of background light can vary, for example due to the use of pulse width modulated grow lights for the light source. Such grow lights commonly include light in the same far-red wavelengths associated with chlorophyll fluorescence, and the pulse width modulation of this light source introduces a flicker into any images taken of the plants. This background flicker makes it difficult to determine in any one image the proportion of light coming from chlorophyll fluorescence and the proportion that is merely reflected from the grow lights. Conventionally, this has been addressed by changing the grow lights to remove the use of pulse width modulation, so that any background is constant for all images. However, the present method may involve using an imaging optical sensor to capture an image of the measurement area, and then using a controller to distinguish between a target area containing the measurement area irradiated with light from the measurement light source and at least one background area in a measurement image, and then adjusting the detected intensity in the target area based on the detected intensity in the background area. The target area may typically be identified based on its brightness and its position and shape, i.e. it will typically be a bright point in the image whose position will be confined to certain areas dependent on the alignment of the measurement light source relative to the sensor and the distance to the target. Computer vision techniques may be used to outline the target region more accurately, this could include image subtraction, contouring, averaging or denoising. Any point outside of this area in the image may be expected to contain predominantly reflected light from a grow light or other background source and so may be used to establish a background intensity level in the target area. It will be noted that the advantages of this technique are permitted by the way the method irradiates only a small area of the target and known techniques that bathe the target in light cannot get an instantaneous comparison with an unilluminated background area.

In these embodiments, the background area may be substantially the entire of the measurement image outside of the target area. This may make the background compensation computationally simple. Alternatively, the controller may be configured to select a part of the measurement image outside of the target area as the background area, preferably based on the detected intensities across the measurement image. For example, this may involve computer vision techniques that look to identify an area of the same plant or same leaf as at the target area, or may be based on intensity and proximity in the image to the target area, or may target a particular vertical or horizontal portion of the image to avoid background differences caused by, for example, a rolling shutter.

Adjusting the detected intensity in the target area will typically involve the calculating, e.g. with the controller, an average background intensity across the background area and subtracting the average background intensity from the detected intensity in the target area. For example, an average background intensity may be calculated by summing the intensity of each pixel in the background area and dividing by the number of pixels. Alternatively, the fiftieth percentile could be taken as the median background pixel intensity. The background value may then be subtracted from each pixel in the target area to compensate for artificial background lighting.

The present method may involve any technique for determining the intensity of light during each irradiation step. It is important to note in this regard that this step would cover determining the absolute intensity of light, e.g. PPFD measured in $\mu$mol m$^{-2}$ s$^{-1}$, or determining the relative intensity of light, e.g. the first irradiation step is half as intense as the second irradiation step. For example, where a system performing the method is integrated with the light source, the light intensity may be determined as the light control settings used for the light source in each irradiation step. However, direct integration with the light source may be complex or expensive, or the correspondence between the control of the light source and the resulting intensity may not be adequately known. Therefore, in many cases, it is necessary to somehow measure the light intensity in the environment. While this could involve placing a PPFD sensor near to the plant and directly measuring the PPFD, this increases the installation cost of a system performing the method. Therefore, preferably, determining the intensity of light during each irradiation step comprises capturing an image of the plant (optionally a plurality of images of the plant) during each irradiation step, and determining the intensity of light based on the brightness of at least part of the (or each) image. For example, the intensity of light may simply be determined by analysing the pixel values of the pixel in the captured images. As indicated above, this assessment may be based on one image, or may need to be based on several images, e.g. if pulse width modulated grow lights are for the light source. Alternatively, the exposure time may be adjusted to accommodate for pulse width modulated grow lights.

While the imaging optical sensor used to capture the images for determining intensity of light could be calibrated in order to allow an absolute intensity value to be measured, this is not necessary, and so preferably a relative intensity of light between each irradiation step is determined based on the captured images of the plant during each irradiation step. For example, from the pixel values of an image captured in the different irradiation steps it may be possible to see how much brighter one image is than another and so infer how much the intensity has changed between the images.

The intensity of light could be determined based on the whole captured image in each irradiation step. However, preferably the method comprises determining the intensity of light based on the brightness of at least part of the image corresponding to an area of the plant from which the light is reflected. This can help prevent interference from background objects in the image and provide more reliable results. An area of a plant from which the intensity is going to be determined may be selected using computer vision techniques.

Particularly preferably, the intensity of light during each irradiation step is determined based on an image captured by the same imaging optical sensor used to detect chlorophyll fluorescence. This reduces the complexity and cost of the hardware needed to perform the method. The method may also be sped up if the intensity of light during each irradiation step is determined based on an image used to detect chlorophyll fluorescence during the corresponding irradiation step. That is, one of the images captured as part of the chlorophyll fluorescence measurement, as described above, is also used to assess light intensity. This will typically require that a part of the image away from the measurement area is selected to determine the intensity of light, to prevent brightness from the measurement light or from chlorophyll fluorescence interfering with the determination. Again, a region away from the measurement area may be identified using computer vision techniques.

Once a light intensity is selected for plant growth, preferably the method further comprises outputting the selected light intensity. In some embodiments, the system could be integrated with the light source, and could output the selected light intensity by using a controller to output appropriate control signals for setting the light source to operate with the selected intensity. In other embodiments, the selected light intensity may be output by being displayed on a screen. In particular where a system performing the method is not integrated with the light source, preferably the method involves outputting the selected light intensity as proportion of one or more of the intensities used in the at least two irradiation steps. This is particularly useful for enabling an operator of the light source to adjust the light intensity based on the result of the method. For example, this may instruct the operator to select a light intensity that is twice as bright as the first irradiation step, or by selecting the light intensity used in the second irradiation step (the proportion being 1 in this case). Regardless of how the selected value for light intensity is output, preferably the method further comprises irradiating the plant with light of the selected intensity.

The above method for selecting a light intensity may then be repeated as needed, either on a predetermined time scale or at the command of an operator. This may result in a new light intensity being selected in the manner described above. If the method uses different intensities in each irradiation step based on the currently used intensity, then in the first repeat of the method, the intensities used in each irradiation step may be based on the selected intensity from the previous iteration. For example, the method may use irradiation steps comprising an intensity at least 5% above the previously selected intensity, more preferably at least 10% above the previously selected intensity, even more preferably at least 20% above the previously selected intensity, most preferably at least 30% above the previously selected intensity, and an intensity at least 5% below the previously selected intensity, more preferably at least 10% below the previously selected intensity, even more preferably at least 20% below the previously selected intensity, most preferably at least 30% below the previously selected intensity.

Plant growth depends not only on the intensity of light irradiating the plant, but also on the spectral composition, i.e. the proportion of different wavelengths of light, of the light irradiating the plant. For example, according to the Emerson effect, the rate of photosynthesis is far higher when a plant is exposed to both red light and far red light than the sum of the photosynthesis rates for red light and far red light separately. Therefore, preferably, the method comprises comprising irradiating a plant with light in at least two irradiation steps in which the light has different spectral compositions, and selecting a light spectral composition based on the measured chlorophyll fluorescence during said at least two irradiation steps. It should be noted here that the two irradiation steps differing in spectral compositions may be two of the at least two irradiation steps differing in light intensity or could be separate irradiation steps. That is, the at least two irradiation steps differing in spectral composition could have the same intensity as one or more other irradiation steps. If these at least two irradiation steps differing in spectral composition are different to the at least two irradiation steps differing in intensity, then preferably the method further comprises determining the intensity of the light in these at least two irradiation steps. Intensity may be determined in one or more of the manners described above. The method may also comprise determining the spectral compositions of light during each of irradiation steps, and may preferably comprise selecting a light spectral composition based on the observed relationship between the determined light spectral composition and the measured chlorophyll fluorescence. In other embodiments, it may not be necessary to know the spectral composition of light in the two irradiation steps, and the method may simply select the irradiation step that achieved the best results, without knowing what spectral composition this corresponded to.

In these embodiments, the different spectral compositions are assessed to see which leads to the highest electron transport rate. If the at least two irradiation steps differing in spectral composition also differ in intensity, then the chlorophyll fluorescence measurements or the calculations based on these measurements may need to be normalised for the different intensities. This could be done by detecting the different intensities of the different wavelengths of light or by monitoring the power consumption of the different wavelength light sources and factoring in their conversion of that electrical power to light. In one embodiment, the method may comprise selecting the spectral composition that led to the highest (normalised) electron transport rate. The selection of spectral composition may be performed before the selection of light intensity. For example, the spectral composition may be selected and then the at least two irradiation steps differing in light intensity may use the selected spectral composition. Alternatively, the selection of spectral composition may take place simultaneously with or after the selection of the light intensity.

According to another aspect of the invention, there may be provided a method of controlling lighting for plant growth, the method comprising: irradiating a plant with light in at least two irradiation steps, wherein the spectral composition of light in each irradiation step is different; measuring the chlorophyll fluorescence of the plant during each irradiation step; and selecting a light spectral composition based on the measured chlorophyll fluorescence during said at least two irradiation steps.

## BRIEF DESCRIPTION OF DRAWINGS

The invention will now be described with reference to the accompanying drawings, of which:

Figure 1 is a flow diagram illustrating the steps of a method according to an embodiment;
Figure 2 is a graph showing the change in electron transport rate with actinic light intensity for three plants with different growth conditions;
Figure 3 is a schematic illustration of a system suitable for performing the method of Figure 1;
Figure 4 is a perspective view of a system suitable for performing the method of Figure 1;
Figure 5 is a perspective view of part of the system of Figure 4;
Figure 6 is a side view of part of the system of Figure 4;
Figure 7 is a flow diagram illustrating some of the steps in a method according to another embodiment; and
Figure 8 is a measurement image taken while performing the method according to an embodiment.

## DETAILED DESCRIPTION

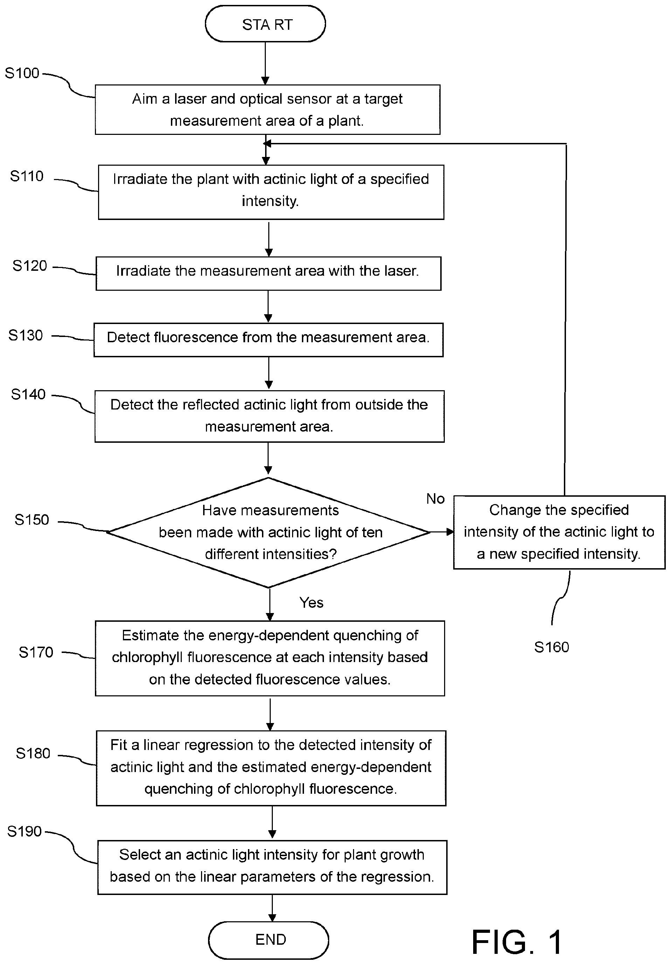

A method according to the invention and a system for performing that method will firstly be described with reference to Figures 1 to 6.

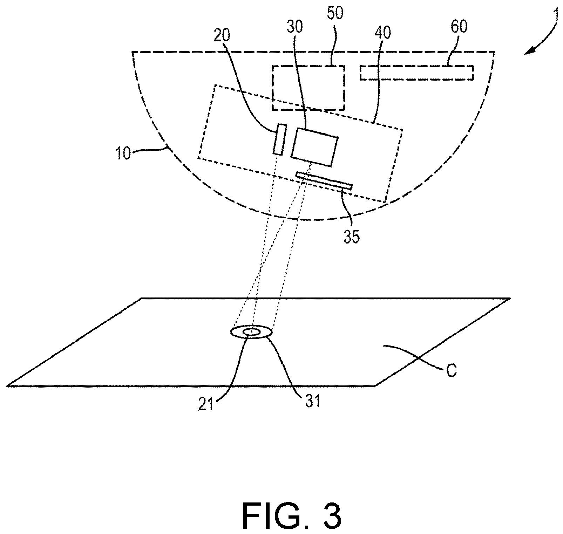

Figure 1 is a flow diagram illustrating the steps in a method according to a first embodiment of the invention. Figure 3 shows a system suitable for performing the method of Figure 1, illustrating the primary components and their use in taking a chlorophyll fluorescence measurement. The system 1 comprises a dome-shaped housing 10, which encloses a laser 20 and a camera or non-imaging optical sensor 30 mounted on a support 40. The support is connected to an actuator 50, which moves the support 40 within the housing 10 so as to change the direction in which the laser 20 and optical sensor 30 are pointed. The housing also encloses a controller 60, which controls the operation of the actuator, laser and optical sensor.

As shown in Figure 3, the dome-shaped housing 10 is mounted by its substantially flat base over a crop C of plants being grown in an area below, so that the dome part of the housing projects downwards. In this arrangement, the support 40 is manoeuvred by the actuator 50 to point the laser 20 and optical sensor 30 at a target in the crop C below. The laser 20 irradiates a measurement area 21 with light and is controlled by the controller 60 to emit a saturation or measurement pulse in accordance with the type of measurement being made. The target may be between 0.1 and 1 meter from the system 1, although the system may be capable of working over a much wider range of distances, and the laser spot size at this distance may be around 2 mm in diameter. The optical sensor 30 has a field of view 31 of the canopy which encompasses the measurement area 21 irradiated by the laser light. The optical sensor may have a field of view corresponding to an area of the canopy of around 20 $cm^2$ at the distance of between 0.1 and 1 meter. A filter 35 is positioned between the optical sensor 30 and the target so that the light emitted from the target as chlorophyll fluorescence is detected by the optical sensor 30 and the reflected light from the laser spot 21 is filtered out by the filter 35.

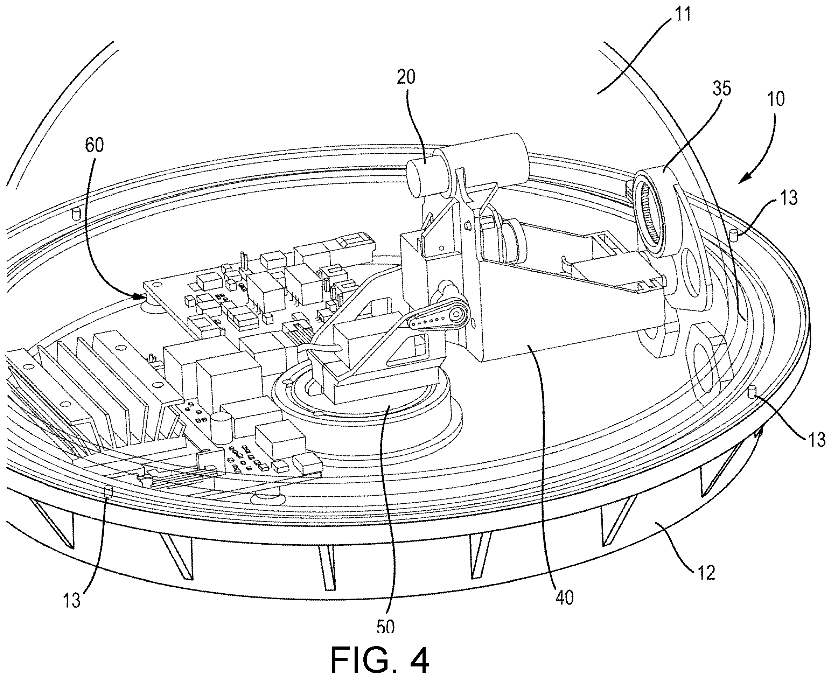

Figure 4 shows the system in more detail with the optical sensor 30 omitted and shows that the dome-shaped housing 10 comprises a transparent dome-shaped cover 11, which is attached to a circular base 12 with a raised rim at its periphery. The cover 11 is attached to the circular base 12 by screws (not shown) that connect through screw holes 13 in a peripheral lip of the cover 11, and fasten the cover 11 to the base 12. The remaining components of the system are then enclosed within the housing, being contained between the base 12 and the cover 11, with the optical components, i.e. the laser 20 and the optical sensor 30 still able to operate through the transparent cover 11. The entire system 1 may be mounted over a canopy by attaching the base 12 to a surface over the canopy, such as the ceiling, via screw holes (not shown) or other attachment means of the base 12.

Within the housing 10 are control electronics 60. This includes a controller for the actuator 50, a controller for the laser 20, and a controller for the optical sensor 30, which are coordinated to take a measurements in the crop C below the system. These control electronics are mounted on the base 12 of the housing 10 so that they are stationary during use.

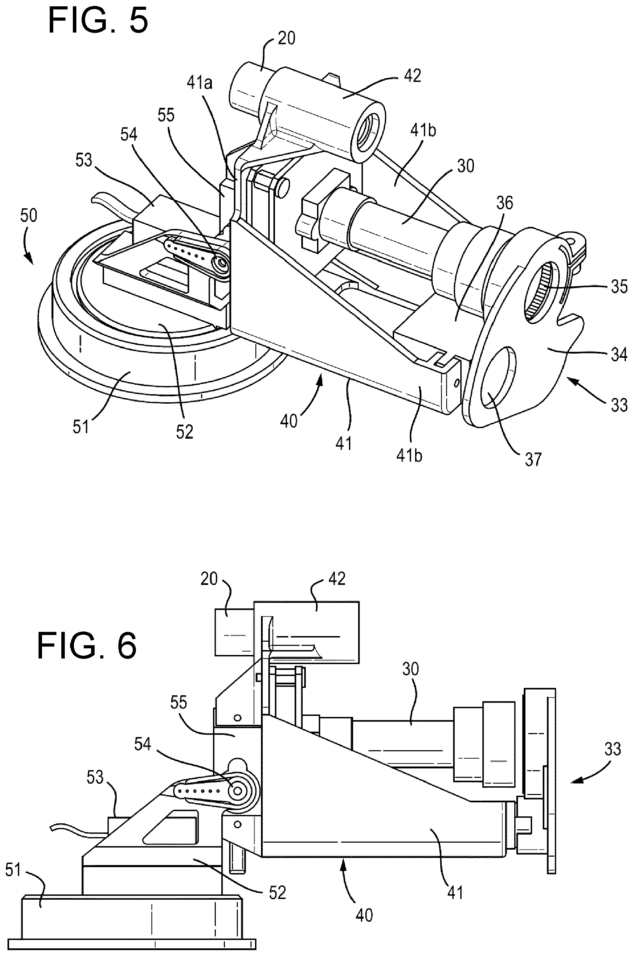

Also within the housing 10, as mentioned, are the laser 20, optical sensor 30, support 40 and actuator 50, which are shown in isolation in Figures 5 and 6. As shown in these figures, in this embodiment the optical sensor is a 30. The actuator 50 comprises a ring-shaped base 51 inside of which is mounted a platform 52 having a circular part that is received in the base 51 and a mounting portion. On the mounting portion is located a pan servo motor 53, which operates through a central axis through the platform and is preferably capable of rotating the platform through 360°. Also mounted to the platform 52 via an axis 54 is a tilt servo motor 55. The tilt servo motor is preferably capable of rotating 90° in this configuration, relative to the platform 52. The actuator, in this case, comprises the combination of the pan servo motor 53 and the tilt servo motor 55. An actuator of this type, with variable yaw and pitch, is able to point the laser and the camera across a wide area and so survey a large crop area with a small system footprint.

The support 40 is a piece of moulded plastic that attaches to the housing of the tilt motor 55 of the actuator 50 and supports both of the laser 20 and the camera 30, along with the filter 35. The support 40 comprises, in particular, a camera-holding portion 41 and a laser holding portion 42. These are arranged so that both the laser 20 and the camera 30 are pointed along the same direction, i.e. parallel with one another, with the laser 20 being spaced a few centimetres above the camera 30.

The camera-holding portion 41 includes a rear plate 41a, to which the camera 30 is attached, pointing away from the rear plate and towards the target. It also comprises two arms 41b, which extend forwards from the rear plate 41a, beneath the camera barrel. The two arms connect at their forward end to the filter assembly 33. The filter assembly comprises a filter wheel 34 connected to a filter motor 36 mounted on end of the arms 41b. The filter motor 36 operates to rotate the filter wheel 34 so that either filter 35 or filter 37 within the filter wheel may be placed in front of the camera 30. The filter 35, which is held in front of the lens of the camera, may be a long-pass interference filter, which filters out perpendicularly incident light having a wavelength of less than 650 nm, to allow the camera 30 to measure the fluorescence in the range 650 to 750 nm, or may be a band-pass filter, blocking all light outside of the range 650 to 750 nm. Filter 37 may be a different filter, such as a band-pass filter of 650 to 700 nm or 700 nm to 750 nm, for acquiring PSI or PSII fluorescence in isolation. Alternatively, filter 35 may be a band-pass filter of 650 to 700 nm and filter 37 a band-pass filter of 700 nm to 750 nm to allow the system to measure both PSI and PSII fluorescence independently of one another.

The laser-holding portion 42 of the support 40 is a substantially cylindrical sleeve that is open at both ends, with a smaller opening at the front end, through which the laser beam is emitted. The laser-holding portion 42 receives a substantially cylindrical laser in the open rear end, which points forwards through the open front end.

The laser 20 itself is configured to emit collimated light having a wavelength of approximately 450 nm, with a beam diameter of 3 mm and should be capable of delivering saturation pulses lasting approximately one second to the target having an average photosynthetic photon flux density (PPFD) of 8000 $\mu$mol m$^{-2}$ s$^{-1}$. The laser should also be capable of delivering measurement pulses lasting between 1 $\mu$s and 10 ms.

The camera 30 may be an OV9281 manufactured by OmniVision® of 4275 Burton Drive, Santa Clara, California 95054 USA. This camera may be configured with a relatively small field of view of 6° x 4°, which decreases the noise in the signal and increases the sensitivity to the area irradiated by the laser. As mentioned previously, the field of view of the camera must be large enough for the laser spot to be visible across the working range of the system. In embodiments in which the laser 20 and the camera 30 are pointed parallel to one another, the laser spot will be in the centre of the field of view at infinity, and will be closer to the top of the field of view the closer the target is to the system. Indeed, as we have mentioned before, the position of the laser in the field of view of the camera, as well as the spot size, can be used to determine the distance to the target. In other systems, the laser and the camera may not be parallel and may instead define a small but fixed angle in the direction they are pointed, so that the laser spot is in the middle of the field of view of the camera roughly in the centre of the working range of the system. This may cause the spot to move across the full field of view of the camera depending on the distance to the target, and so offer greater sensitivity in measuring the distance to the target. An angle of approximately 8° has been found to be suitable for a typical separation distance of camera and laser and for a working distance in the range 0.1 to 1 m, although it will be appreciated that these can be configured as needed depending on the particular system installation, including the working range and the spacing of the camera and laser. In other embodiments, the angle between the laser and the camera could be adjustable. The control system may adjust the angle between the laser 20 and the camera 30 until the spot is in the centre of the field of view, and then the distance to the target determined by the angle between the camera and the laser needed to achieve this centring of the laser spot.

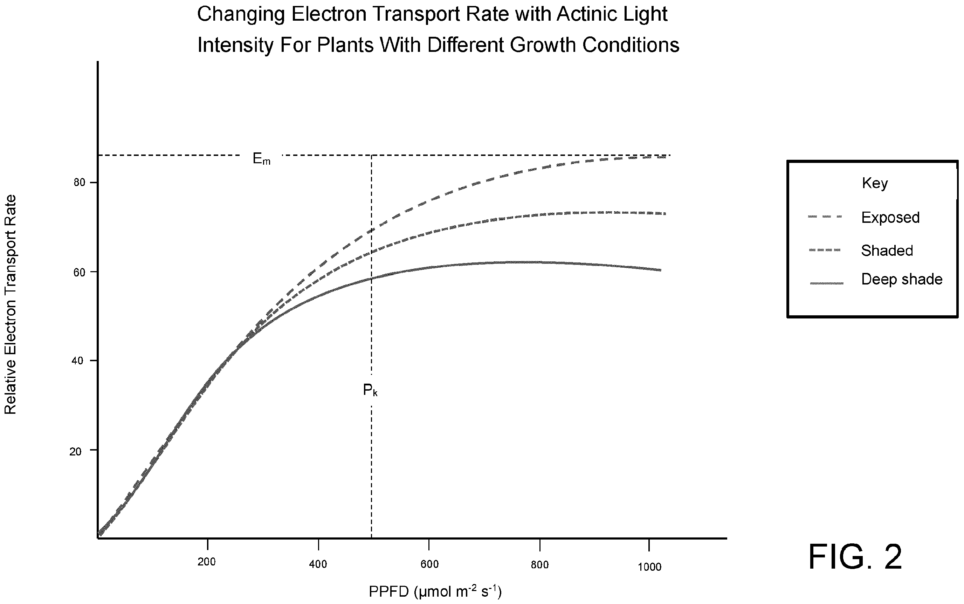

Using this system, the method illustrated in Figure 1 may be performed. To understand the method of claim 1, we also refer to the graph shown in Figure 2. This graph shows how relative electron transport rate increases as the plant is exposed to increasing levels of actinic light measured in $\mu$mol m$^{-2}$ s$^{-1}$. It should be noted that the light response curve shown in this plant will differ from plant to plant, and the present technique can be generalised to any sort of light response curve. As shown in the graph, electron transport rate may initially increase linearly with increasing light intensity. However, the increase in electron transport rate begins to slow towards higher intensities of light, meaning that actinic light is being used less efficiently. This is also where you begin to see differences in the response of a plant depending on its previous growth conditions. Figure 2 illustrates a plant that is fully exposed to the actinic light, a plant that has been shaded, and a plant that has been deeply shaded. As shown in the Figure, the growth conditions of the plant affect its maximum electron transport rate $E_m$ (only the maximum electron transport rate $E_m$ of the exposed plant is annotated in the graph), as well as the efficiency with which light is converted to electron transport across the light curve. The present method seeks to identify a light intensity that will be efficiently responded to by the plant while still producing a high electron transport rate. As mentioned above, it has been found that a good balance between efficiency and electron transport rate is achieved when the intensity is set at the theoretical value at which the maximum electron transport rate $E_m$ would be achieved in the absence of any non-photochemical quenching, which is designated $P_k$. Again, this is annotated on the graph of Figure 2 for the exposed plant.

The method according to Figure 1 first comprises identifying a target area in which chlorophyll fluorescence is to be measured and aiming the laser and optical sensor a the target measurement area in step S100. This may comprise using the pan servo motor 53 and the tilt servo motor 55 to aim the laser 20 and camera 30 at a crop, before taking an image of the crop with the camera 30 and using a computer vision technique to identify a leaf of one plant to target for chlorophyll fluorescence measurements. In other embodiments, the target area could simply be preprogramed. Once the target area is identified, the pan servo motor 53 and the tilt servo motor 55 are used to aim the laser and the camera at this target measurement area.

Next, in step S110, the crop is irradiated with actinic light from an actinic light source. This will typically be provided by the grow lights used in the setting in which the method is being performed. The crop is irradiated with actinic light having a first predefined intensity. For example, the light may have a PPFD of 200 $\mu$mol m$^{-2}$ s$^{-1}$. Many grow lights are not set to a specific PPFD, but may be controlled by setting the intensity, for example, as a percentage of their maximum intensity.

Typically, a crop will need to be allowed some time to adapt to new actinic light conditions before a chlorophyll fluorescence may be measured. This may be only five seconds, for example.

Once the plant has had chance to adapt to the actinic light intensity, in step S120, the measurement area is irradiated with light from the laser 20 and in step S130 chlorophyll fluorescence from the measurement area is detected by the camera 30. While step S130 is shown as occurring after step S120 in the Figure, it will be appreciated that these largely occur concurrently.

The laser 20 will need to be controlled in order to make the necessary chlorophyll fluorescence measurements. In order to take a measurement of the baseline fluorescence level F', the measurement area may be irradiated with a series of measurement pulses having a PPFD of about 6000 $\mu$mol m$^{-2}$ s$^{-1}$ and a duration of about 1 $\mu$s to 10 ms. The period between each pulse may be between 0.1 s to 10 s. The camera is used to detect chlorophyll fluorescence during this phase. This measurement is stored as the F' measurement. The plant is then irradiated with a saturation pulse from the laser in order to make an $F_m$' measurement. The saturation pulse lasts about 0.8 s. In the saturation pulse, the light is initially turned on to a first amplitude of around 8000 $\mu$mol m$^{-2}$ s$^{-1}$ and the light is pulsed to a higher amplitude of about 14000 $\mu$mol m$^{-2}$ s$^{-1}$. These pulses superimposed on the 8000 $\mu$mol m$^{-2}$ s$^{-1}$ pulse have a duration of about 1 $\mu$s to 10 ms and a period of about 10 ms to 100 ms. The camera is then used to detect the resulting chlorophyll fluorescence and this measurement is stored as the $F_m$' measurement.

Next, in step S140, the intensity of the actinic light is determined by detecting the reflected actinic light from the plant being measured. In this embodiment, the images from the camera 30 are used to make this determination, and in particular the same image used in either the F' or $F_m$' measurement may be used.

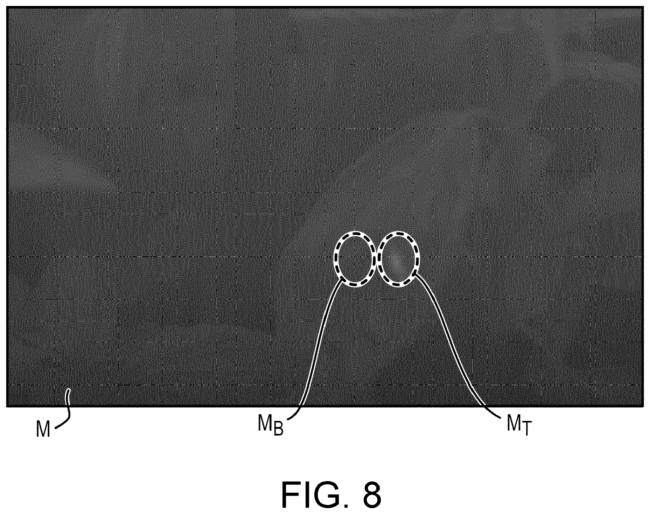

In order to determine the light intensity from one of the images captured by the camera, the present method remotely models changes in light intensity as a linear relationship with changes in light reflection from plant leaves on grayscale camera images. Figure 8 shows one measurement image M taken using the camera through a band-pass filter. This image includes the target measurement area $M_T$, which is an area of the image containing the part of the plant irradiated by the laser spot. This may be identified in the image based on an expected position for the laser and based on the brightness of the image. It will be noted that the area $M_T$ contains a brighter area which corresponds to the chlorophyll fluorescence induced by the laser spot. Also in this image is an area which has been identified as a background area of the same leaf $M_B$. This background area may be identified with computer vision by identifying the perimeter of the leaf containing the target measurement area and selecting an area of this leaf away from the target measurement area. Then the greyscale pixel brightnesses may be averaged across this area in order to get an average pixel brightness, which will be used as an indicator of the actinic light intensity. It should be noted that if pulse width modulated grow lights are used, then the image used to determine light intensity should have been captured with an exposure time long enough to view at least one full cycle of the grow lights, preferably a plurality of cycles, so that the average pixel value truly reflects the intensity of irradiating light. If it is desired to use images with a low exposure time for the chlorophyll fluorescence measurements, then it may be necessary to determine chlorophyll fluorescence and light intensity based on different images with different exposure times. Other light sources may not present this problem.

Additionally, this background area $M_B$ may be used to compensate for any background light from the target measurement area that is not due to chlorophyll fluorescence. To do this, the controller may subtract the average pixel value from the background area from each pixel in the target measurement area $M_T$ in order to get a background adjusted measurement of chlorophyll fluorescence.

The method has now obtained a measure of the intensity of the actinic grow lights by the pixel brightnesses in one of the images taken by the camera 30, and has obtained the chlorophyll fluorescence measurements F' and $F_m$ at this intensity. The method therefore moves on to step S150, where it checks whether it has made measurements with actinic light of ten different intensities. At this stage, only one light intensity has been used, and so the method moves on to step S160, where a new intensity of the actinic lights is specified. The light intensities may be predetermined. For example, the light intensities for the grow lights may be intended to correspond to PPFDs of 200, 300, 400, 500, and 600 $\mu$mol m$^{-2}$ s$^{-1}$, or corresponding light control values. Therefore, 300 $\mu$mol m$^{-2}$ s$^{-1}$ may be specified as the next light intensity.

The method then returns to step S110, and the plant is irradiated with actinic light of the new intensity and allowed five seconds to adjust to the new light intensity. Steps S120, S130 and S140 are then repeated in order to obtain background pixel brightnesses and the chlorophyll fluorescence measurements F' and $F_m$ at this new intensity.

This process is repeated until measurements have been made at ten different intensities, at which point the method proceeds from step S150 to step S170, in which the controller estimates the energy-dependent quenching of chlorophyll fluorescence, qe, at each intensity based on the detected fluorescence values. As indicated above, this may be estimated as:

$$qe = \frac{F'_m - F'}{F_m{}'}$$

Then, the method moves on to step S180, in which a linear regression is fit to the values for the detected intensity of actinic light and the estimated energy-dependent quenching of chlorophyll fluorescence at each light intensity. Since this method uses the pixel brightnesses as an indicator of the light intensity, but without absolute intensity being known, the intensity P can be said to relate to the pixel brightness H by the following equation:

$$P = iH = i(H' - H_0)$$

Here, H' is the measured pixel brightness, $H_0$ is the pixel brightness at zero intensity and i is a scaling factor. The pixel brightness at zero light intensity can be determined during a calibration phase of the system or assumed for a particular model of optical sensor. Thus, from the above equations energy-dependent quenching of chlorophyll fluorescence, qe, as a function of pixel brightness, H is:

$$qe(H) = m(iH') + c$$

Therefore, the pixel brightness $H_k$ that corresponds to the light intensity $P_k$ at which the maximum electron transport rate $E_m$ would be achieved in the absence of any non-photochemical quenching is:

$$H_k = \frac{P_k}{i} = -\frac{c}{4im}$$

By fitting a linear regression to the background pixel brightnesses and the estimated energy-dependent quenching of chlorophyll fluorescence across the ten intensities, the linear parameters im and c can be obtained and thus, in step S190, an intensity of light that will be more efficient can be calculated as the desired pixel brightness $H_k$ that would correspond to the light intensity $P_k$. As indicated above, while this value is selected as an efficient light intensity for plant growth, in principle any value may be selected equal to or less than $P_m$, the light intensity achieving maximum electron transport rate $E_m$, and the particular proportion of $P_m$ selected may depend on a grower's priorities around growth rate and energy efficiency.

Once the desired pixel brightness corresponding to the desired intensity is selected this may be used as desired. For example, as noted above, in some embodiments the system controller 60 may be operably connected to the actinic light source and able to control the light source to work with the selected intensity. In other embodiments, the controller may output the selected intensity on an interface, such as a display, connected to the system, or may be delivered on an operator's device via an API. In this case, the most convenient way to facilitate an adjustment of the actinic lighting intensity is to output the desired intensity as a proportion of one or more of the intensities at which measurements were made. For example, the intensity may be indicated as 1.2 times the third intensity used, or 40% of the way between highest and lowest intensity used.

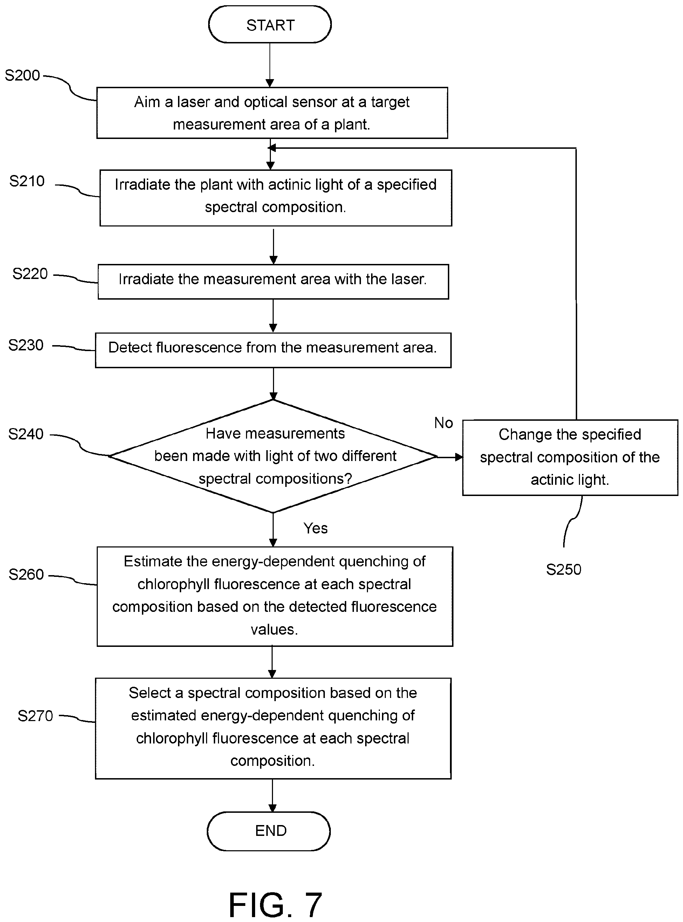

Figure 7 shows another series of steps that may be used to select a spectral composition for the light to be used in plant growth. This method may be performed before or after the steps of the method shown in Figure 1, or may be integrated with the method of Figure 1.

This method begins with aiming the laser 20 and camera 30 at a target measurement area of a plant in step S200. This method may be performed in the same way as step S100, described above.

Next, in step S210, the crop is irradiated with actinic light of a specified spectral composition. For example, many grow lights are provided by a series of LED lights that emit different wavelengths of light. Spectral composition may be varied by independently changing the intensity of these different colour grow lights so that the different colours make up a different proportion of the total light intensity. The spectral compositions to be tested may be pre-set and may cover a series of different relative proportions of the different colours of lights available in the setting in question.

After the plant's chlorophyll reaction centres have adjusted to the new light intensity, e.g. for a few seconds, the measurement area is irradiated with a laser in step S220 and then chlorophyll fluorescence is detected in step S230. These steps may be performed in the same manner described above with regard to steps S120 and S130 of Figure 1. As mentioned above, the measurements of F' and $F_m$' should be made, but other chlorophyll fluorescence measurements may be made as necessary.

In step S240, the method checks whether the required number of different spectral compositions have been tested, and if not proceeds to step S250, where the next spectral composition is selected as the specified spectral composition to be used. The method then returns to step S210 and the new specified spectral composition is used to irradiate the plants. Steps S220 and S230 are then repeated to measure the chlorophyll fluorescence.

It should be noted that the spectral compositions may be chosen to have approximately the same intensity. However, if not, it may be necessary to detect the intensity of light used in the same manner described above with regard to Figure 1, so that the chlorophyll fluorescence measurements can be normalised for the different intensities of each different LED type. As mentioned above, alternatively, this normalisation may be based on the power consumption and conversion efficiency of each different LED type.

Once the required number of different spectral compositions have been selected, the method moves on to step S260, in which, in this embodiment, the energy-dependent quenching of chlorophyll fluorescence is estimated from the measurements of F' and $F_m$'. Since electron transport rate is proportional to the energy-dependent quenching of chlorophyll fluorescence, it will generally be expected that a higher electron transport rate will be achieved for the same light intensity if a spectral composition resulting in the highest energy-dependent quenching of chlorophyll fluorescence is used. Thus, in step S270, the method selects the spectral composition, in this case leading to the highest estimated energy-dependent quenching of chlorophyll fluorescence. Again, this spectral composition may then be output on an interface, such as a display, connected to the system, or may be delivered on an operator's device via an API.

In particularly preferable embodiments the steps of the method of Figure 7 may be performed before the steps of the method of Figure 1, and the actinic light used in those later steps may all be provided with the selected spectral composition.

The above described processes for selecting spectral composition and lighting intensity for plant growth may be performed once or twice a day, or otherwise as needed, so that the lighting for the plants is adjusted in response to changes in the plants. As a result, light can be efficiently used through the growth cycle of the plants.

## Claims

1. A method of controlling lighting for plant growth, the method comprising:

   irradiating a plant with light in at least two irradiation steps, wherein the intensity of light in each irradiation step is different;
   determining the intensity of light during each irradiation step;
   measuring the chlorophyll fluorescence of the plant during each irradiation step; and
   selecting a light intensity for plant growth based on the observed relationship between the determined intensity of light and the measured chlorophyll fluorescence across the at least two irradiation steps.

2. A method according to claim 1, wherein selecting the light intensity for plant growth comprises selecting a light intensity that is less than an estimate of the light intensity required to achieve a maximum electron transport rate, wherein the estimated light intensity required to achieve a maximum electron transport rate is obtainable using the determined intensity of light and the measured chlorophyll fluorescence of the plant during each irradiation step.

3. A method according to claim 1 or claim 2, comprising irradiating a plant with light in at least three irradiation steps, preferably at least four irradiation steps, more preferably at least five irradiation steps, most preferably at least ten irradiation steps, wherein the intensity of light in each irradiation step is different.

4. A method according to any of the preceding claims, wherein measuring the chlorophyll fluorescence of the plant during each irradiation step comprises using a measurement light source to emit substantially collimated or convergently focussed light to irradiate a measurement area of the plant with measurement light, and using an optical sensor to detect chlorophyll fluorescence from the measurement area.

5. A method according to claim 4, wherein the optical sensor comprises an imaging optical sensor, such as a camera, configured to capture an image of the measurement area.

6. A method according to claim 4 or claim 5, wherein the measurement light source comprises a laser, wherein preferably the laser is configured to irradiate a spot-shaped area with light.

7. A method according to any of claims 4 to 6, comprising identifying a target measurement area and using an actuator to controllably direct the light from the measurement light source to irradiate the target measurement area.

8. A method according to claim 7, comprising using an actuator, preferably the same actuator used to controllably direct the light from the measurement light source, to move the optical sensor and/or to move one or more optical elements, such as mirrors, relative to the optical sensor so as to enable the optical sensor to detect chlorophyll fluorescence from the target measurement area.

9. A method according to any of the preceding claims, wherein determining the intensity of light during each irradiation step comprises capturing an image of the plant during each irradiation step, and determining the intensity of light based on the brightness of at least part of the image.

10. A method according to claim 9, wherein a relative intensity of light between each irradiation step is determined based on the captured images of the plant during each irradiation step.

11. A method according to claim 9 or claim 10, comprising determining the intensity of light based on the brightness of at least part of the image corresponding to an area of the plant from which the light is reflected.

12. A method according to any of claims 9 to 11 when dependent on at least claim 5, wherein the intensity of light during each irradiation step is determined based on an image captured by the same imaging optical sensor used to detect chlorophyll fluorescence.

13. A method according to claim 12, wherein the intensity of light during each irradiation step is determined based on an image used to detect chlorophyll fluorescence during the corresponding irradiation step.

14. A method according to any of the preceding claims, further comprising outputting the selected light intensity, and preferably comprising outputting the selected light intensity as proportion of one or more of the intensities used in the at least two irradiation steps.

15. A method according to any of the preceding claims, comprising irradiating a plant with light in at least two irradiation steps in which the light has different spectral compositions, and selecting a light spectral composition based on the measured chlorophyll fluorescence during said at least two irradiation steps.

START

S100 — Aim a laser and optical sensor at a target measurement area of a plant.

S110 — Irradiate the plant with actinic light of a specified intensity.

S120 — Irradiate the measurement area with the laser.

S130 — Detect fluorescence from the measurement area.

S140 — Detect the reflected actinic light from outside the measurement area.

S150 — Have measurements been made with actinic light of ten different intensities?

No → Change the specified intensity of the actinic light to a new specified intensity.

S160

Yes

S170 — Estimate the energy-dependent quenching of chlorophyll fluorescence at each intensity based on the detected fluorescence values.

S180 — Fit a linear regression to the detected intensity of actinic light and the estimated energy-dependent quenching of chlorophyll fluorescence.

S190 — Select an actinic light intensity for plant growth based on the linear parameters of the regression.

END

FIG. 1

Changing Electron Transport Rate with Actinic Light Intensity For Plants With Different Growth Conditions

FIG. 2

FIG. 3

FIG. 4

## FIG. 5

## FIG. 6

START

S200 — Aim a laser and optical sensor at a target measurement area of a plant.

S210 — Irradiate the plant with actinic light of a specified spectral composition.

S220 — Irradiate the measurement area with the laser.

S230 — Detect fluorescence from the measurement area.

S240 — Have measurements been made with light of two different spectral compositions?

No → Change the specified spectral composition of the actinic light.

S250

Yes

S260 — Estimate the energy-dependent quenching of chlorophyll fluorescence at each spectral composition based on the detected fluorescence values.

S270 — Select a spectral composition based on the estimated energy-dependent quenching of chlorophyll fluorescence at each spectral composition.

END

# FIG. 7

FIG. 8

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 074 164 A1 (HELIOSPECTRA AB PUBL [SE]) 19 October 2022 (2022-10-19) | 1 | INV. A01G7/04 |
| A | * paragraph [0007] – paragraph [0014]; claims; figures * | 2-15 | |
| A | EP 1 563 282 A1 (PLANT RES INT BV [NL]; JALINK HENDRIK [NL] ET AL.) 17 August 2005 (2005-08-17) * paragraph [0009] – paragraph [0018]; figures * | 1-15 | |
| A | WO 2013/181433 A2 (UNIV MICHIGAN STATE [US]) 5 December 2013 (2013-12-05) * paragraph [0051] – paragraph [0061]; claims; figures * | 1-15 | |
| A | US 2011/179706 A1 (HUNT RYAN W [US] ET AL) 28 July 2011 (2011-07-28) * claims; figures * | 1-15 | |
| A | WO 2012/166954 A2 (LI COR INC [US]; MC DERMITT DAYLE K [US] ET AL.) 6 December 2012 (2012-12-06) * claims; figures * | 1-15 | TECHNICAL FIELDS SEARCHED (IPC) A01G G01N |

The present search report has been drawn up for all claims

| Place of search | Date of completion of the search | Examiner |
|---|---|---|
| The Hague | 2 June 2023 | Forjaz, Alexandra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 21 3442

This annex lists the patent family members relating to the patent documents cited in the above-mentioned European search report.
The members are as contained in the European Patent Office EDP file on
The European Patent Office is in no way liable for these particulars which are merely given for the purpose of information.

02-06-2023

| Patent document cited in search report | | Publication date | Patent family member(s) | | Publication date |
|---|---|---|---|---|---|
| EP  4074164 | A1 | 19-10-2022 | EP | 4074164 A1 | 19-10-2022 |
|  |  |  | WO | 2022218929 A1 | 20-10-2022 |
| EP  1563282 | A1 | 17-08-2005 | AT | 332497 T | 15-07-2006 |
|  |  |  | AU | 2003277742 A1 | 25-05-2004 |
|  |  |  | BR | 0315850 A | 20-09-2005 |
|  |  |  | CA | 2503711 A1 | 13-05-2004 |
|  |  |  | DE | 60306675 T2 | 12-07-2007 |
|  |  |  | DK | 1563282 T3 | 30-10-2006 |
|  |  |  | EP | 1563282 A1 | 17-08-2005 |
|  |  |  | ES | 2268487 T3 | 16-03-2007 |
|  |  |  | JP | 2006504956 A | 09-02-2006 |
|  |  |  | NL | 1021800 C2 | 06-05-2004 |
|  |  |  | NZ | 539574 A | 27-10-2006 |
|  |  |  | US | 2006102851 A1 | 18-05-2006 |
|  |  |  | WO | 2004040274 A1 | 13-05-2004 |
| WO 2013181433 | A2 | 05-12-2013 | CA | 2874853 A1 | 05-12-2013 |
|  |  |  | EP | 2856118 A2 | 08-04-2015 |
|  |  |  | US | 2015204787 A1 | 23-07-2015 |
|  |  |  | WO | 2013181433 A2 | 05-12-2013 |
| US 2011179706 | A1 | 28-07-2011 | US | 2011179706 A1 | 28-07-2011 |
|  |  |  | US | 2013040380 A1 | 14-02-2013 |
| WO 2012166954 | A2 | 06-12-2012 | EP | 2715341 A2 | 09-04-2014 |
|  |  |  | US | 2012310540 A1 | 06-12-2012 |
|  |  |  | WO | 2012166954 A2 | 06-12-2012 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **E. MURCHIE ; T. LAWSON.** Chlorophyll fluorescence analysis: a guide to good practice and understanding some new applications. *Journal of experimental botany,* 2013, vol. 64 (13), 3983-98